# EUROPEAN PATENT APPLICATION

(11) **EP 4 321 316 A1**
(43) Date of publication of application: **14.02.2024**
(21) Application number: 22189482.7
(22) Date of filing: 09.08.2022
(51) Int. Cl.: B28B 1/00, B28B 23/00, B28B 23/02, B33Y 10/00, B33Y 80/00

(54) **REINFORCING 3D-PRINTED MINERAL BINDER-BASED OBJECTS WITH FIBER REINFORCED POLYMERS**

(71) Applicant: Sika Technology AG, 6340 Baar (CH)
(72) Inventor: Bernard, Mylène, 8952 Schlieren (CH); Liard, Maxime, 8050 Zürich (CH); Lootens, Didier, 8700 Küsnacht (CH); Trousset, Léon, 8049 Zürich (CH)
(74) Representative: Sika Patent Attorneys

(57) **Abstract**

A method for producing a reinforced three-dimensional object from a mineral binder composition with an additive manufacturing process, comprising the steps of:
a) Applying a curable mineral binder composition in the setting state with an additive manufacturing device (100), especially having a movable printing head (103), to produce the unreinforced three-dimensional object (50);
b) During production of the three-dimensional object (50) in step a), forming at least one recess (51) in a surface of the three-dimensional object (50) for receiving a reinforcement element (40) in the three-dimensional object (50);
c) Insertion of a reinforcing element (40) into the at least one recess (51), whereby the reinforcing element (40) is a fiber-reinforced polymer comprising load-bearing fibers (42) kept together by an organic synthetic material (41);
d) Bonding the reinforcing element (40) in the at least one recess (51) with an adhesive.

## Description

### Technical field

The invention relates to a method for producing a reinforced three-dimensional object from mineral binder compositions with an additive manufacturing process and a reinforced three-dimensional object.

### Background art

In construction industry, curable binder compositions, such as e.g. mineral binder compositions, are widely used for various applications. Examples of such compositions are mortar, concrete, grout, or screed compositions.

Attempts have been made for some time to produce geometrically demanding construction elements using additive manufacturing processes. The term "additive manufacturing process" or "additive production" refers to processes in which a spatial object or a molded body is produced by the targeted spatial deposition, application and/or solidification of material.

The deposition, application and/or consolidation of the material, e.g. the curable binder composition, is carried out in particular on the basis of a data model of the object to be generated and in particular layer-by-layer. Thus, in the additive manufacturing process, each object is typically produced from one or more layers. Usually, a formless material (e.g. liquids, powders, granulates, etc.) and/or a form-neutral material (e.g. tapes, wires) is used to manufacture an object, which is subjected in particular to chemical and/or physical processes (e.g. melting, polymerizing, sintering, curing). Additive manufacturing processes are also referred to as "generative manufacturing processes" or "3D printing", among others.

Additive manufacturing in the construction sector is quickly developing and projects involving this technology are becoming more and more ambitious.

However, producing structural elements form cementitious materials, such as mortars or concrete, by additive manufacturing is a highly demanding task. While cementitious materials are known for their high compressive strength, they have a rather low tensile and flexural strength. Therefore, structural elements made from these materials usually need to be reinforced, e.g. with steel rebars or fibers providing flexural strength.

Unlike traditional casting methods, with additive manufacturing it is hardly possible to install the reinforcement element, e.g. steel rebars, before producing the object by additive manufacturing. Robots or gantry printers will hardly be able to navigate safely around complex reinforcement structures.

In order to circumvent these problems, WO 2015/034438 A1 (ETH; Sika Technology AG), proposes a method of fabricating a 3-dimensional structure comprising the steps of: providing a mesh formwork element such that a cavity bound by at least two opposing portions of the mesh formwork is formed; accumulating a material in the cavity; and allowing the material to harden; wherein apertures in the at least two opposing portions of the mesh formwork element are adapted to the hydro-static pressure of the accumulated material or vice versa such that at least two surfaces of the hardened material substantially take on the respective shapes defined by the two opposing portions of the mesh formwork element.

Although this approach represents a suitable solution to produce complex structures which would hardly be obtainable by traditional casting techniques, the production of the reinforcing formwork element is rather complex.

Thus, there is still a need for new and improved solutions that overcome the aforementioned disadvantages as far as possible.

### Disclosure of the invention

It is an object of the present invention to provide improved solutions for producing reinforced three-dimensional objects from mineral binder compositions with an additive manufacturing process. In particular, the solution should allow for a flexible but still reliable reinforcement of three-dimensional objects.

Surprisingly, it was found that these objects can be achieved with the method according to independent claim 1.

Specifically, according to the invention, a method for producing a reinforced three-dimensional object from a mineral binder composition with an additive manufacturing process comprises the steps of:
a) Applying a curable mineral binder composition in the setting state with an additive manufacturing device, especially having a movable printing head, to produce the three-dimensional object;
b) During production of the three-dimensional object in step a), forming at least one recess in a surface of the three-dimensional object for receiving a reinforcement element in the three-dimensional object;
c) Insertion of a reinforcing element into the at least one recess, whereby the reinforcing element is a fiber-reinforced polymer comprising load-bearing fibers kept together by an organic synthetic material;
d) Bonding the reinforcing element in the at least one recess with an adhesive.

As it turned out, the inventive concept allows for producing reinforced three-dimensional objects by additive manufacturing in a highly efficient manner. Especially, the reinforcing element(s) are inserted in the at least one the recess formed in the surface of the three-dimensional object after production of the later. There is thus no need to apply the curable binder composition around preinstalled reinforcements, which would hinder deposition of the curable mineral binder material. In contrast, the additive manufacturing process can be performed essentially similar to a process of producing a three-dimensional object without reinforcement.

Since the additive manufacturing allows for producing objects with highly complicated structures, it is possible to specifically design the three-dimensional object with at least one or more recesses for receiving the reinforcing element(s) at an optimal position for reinforcing the object. Thereby the weight impact of the reinforcing elements can be minimized while the strength of the objects is maximized.

Furthermore, thanks to the at least one recess, the reinforcement element can be safely integrated in the surface at a clearly defined position required for achieving the desired structural strengthening. Since the reinforcing element is at least partly or fully received in the at least one recess, it protrudes less or not at all from the surface of the object. Therefore, the reinforcement element increases the volume and weight of the three-dimensional object less. Additionally, the reinforcing element can even be integrated such that it is essentially invisible.

This is in sharp contrast to classical strengthening of three-dimensional objects with fiber-reinforced polymers: Thereby the reinforcing element is simply attached on top of a surface of the object. Consequently, there is no predefined position, which increases the risk that the reinforcing element is attached at a wrong position whereby the desired strengthening effect is reduced. Also, the reinforcing element unavoidably protrudes with its total volume from the surface of the object and is thus more susceptible to damage.

Due to the fact that the reinforcement element is a fiber-reinforced polymer comprising load-bearing fibers kept together by an organic synthetic material, it can be made flexible enough to integrate it into non-planar surfaces and/or to place it around edges of the three-dimensional object. Therefore, the inventive solution is highly flexible with regard to the shape of the objects to be reinforced.

In addition, the inventive method can be performed with known equipment used in additive manufacturing or 3D printing, respectively. Thus, there is no need to provide additional devices. Furthermore, the production of the three-dimensional object and the insertion and bonding of the reinforcing element can take place independently of each other in terms of time and place. Therefore, the process is highly flexible.

Further aspects are described below and are subject of the further independent claims. Particularly preferred embodiments are outlined throughout the description and the dependent claims.

### Ways of carrying out the invention

A first aspect of the present invention is directed to a method for producing a reinforced three-dimensional object from a mineral binder composition with an additive manufacturing process comprises the steps of:
a) Applying a curable mineral binder composition in the setting state with an additive manufacturing device, especially having a movable printing head, to produce the three-dimensional object;
b) During production of the three-dimensional object in step a), forming at least one recess in a surface of the three-dimensional object for receiving a reinforcement element in the three-dimensional object;
c) Insertion of a reinforcing element into the at least one recess, whereby the reinforcing element is a fiber-reinforced polymer comprising load-bearing fibers kept together by an organic synthetic material;
d) Bonding the reinforcing element in the at least one recess with an adhesive.

A "curable mineral binder composition" is meant to be a material, which comprises a mineral binder and after addition of mixing water, can cure by a chemical reaction to form a solid.

The term "mineral binder" refers in particular to a binder which reacts in the presence of water in a hydration reaction to form solid hydrates or hydrate phases. This can be, for example, a hydraulic binder (e.g. cement or hydraulic lime), a latent hydraulic binder (e.g. slag), a pozzolanic binder (e.g. fly ash) or a non-hydraulic binder (e.g. gypsum or white lime).

A "mineral binder composition" is accordingly a composition containing at least one mineral binder. In particular, it contains the binder, aggregates and/or one or more additives. Aggregates may be, for example, gravel, sand (in natural and/or processed, e.g. crushed, form) and/or filler. The mineral binder composition is in particular a fluid binder composition mixed with mixing water.

The expression "the curable binder composition in the setting state" in particular means that the curable mineral binder composition is in a condition in which the setting of the binder in the curable binder composition has started but is not yet complete.

A mineral binder composition is in the setting state after mixing the mineral binder and optionally further components, such as e.g. aggregates, with the mixing water.

The mineral binder comprised in the curable mineral binder composition is preferably selected from the group consisting of cement, gypsum, burnt lime, slag, and fly ash, and mixtures thereof. The curable mineral binder composition preferably comprises at least one hydraulic binder, preferably a cementitious binder.

The hydraulic binder is preferably selected from the group consisting of Portland cement, calcium aluminate cement, calcium sulfoaluminate cement, and mixtures thereof.

The cement used may be any available cement type or a mixture of two or more cement types, examples being the cements classified under DIN EN 197-1: Portland cement (CEM I), Portland composite cement (CEM II), blast furnace slag cement (CEM III), pozzolanic cement (CEM IV), and composite cement (CEM V). Cements produced according to an alternative standard, such as the ASTM standard or the Indian standard, for example, are of course equally suitable. Particularly preferred is a cement according to DIN EN 197-1, a calcium sulfoaluminate cement, a calcium almninate cement, or mixtures thereof, optionally in a mixture with calcium sulfate.

The most preferred is Portland cement or a cement including Portland cement according to DIN EN 197-1. Portland cement is particularly readily available and allows mortars to have good properties.

Also especially suitable are mixtures of Portland cement, calcium aluminate cement, and calcium sulfate, or mixtures of cement and calcium sulfoaluminate cement. Such binder mixtures allow short setting times and high early strengths.

The curable mineral binder composition preferably further comprises aggregates, especially mineral aggregates. Aggregates are chemically inert, solid, particulate materials and are available in various shapes, sizes and as different materials, varying from extremely fine particles of sand to large coarse stones. All aggregates typically employed for concrete and mortar are suitable in principle.

Examples of particularly suitable fillers are rock particle size fractions, gravel, sand, especially silica sand and limestone sand, comminuted stones, calcined pebbles or lightweight fillers such as expanded clay, expanded glass, foamed glass, pumice, perlite, and vermiculite. Other advantageous aggregates are calcium carbonate, aluminum oxide, amorphous silica (silica fume), or crystalline silica (quartz flour).

The particle size is guided by the application and is situated in the range from 0.1 mm to 32 mm or more. Preference is given to mixing different particle sizes in order to provide optimum establishment of the properties of the curable mineral binder composition. Aggregates composed of different materials can also be mixed. The particle size may be determined by means of sieve analysis.

Preferred aggregates are those having particle sizes of not more than 8 mm, more preferably not more than 5 mm, more preferably still not more than 3.5 mm, most preferably not more than 2.2 mm.

The curable mineral binder composition preferably comprises aggregates of which at least 30 wt %, more preferably at least 40 wt %, most preferably at least 50 wt % are smaller than 2 mm, preferably smaller than 1 mm, more preferably smaller than 0.5 mm, based on a total amount of 100 wt % of all aggregates in the curable mineral binder composition. Suitable aggregates of low particle size are, in particular, fine silica sands or calcium carbonate powders.

Curable mineral binder compositions having such particle sizes are readily conveyable, can be mixed well in mixers, especially dynamic mixers.

There are specific applications in which aggregates having particle sizes of up to 32 mm may also be used, more preferably up to 20 mm, most preferably up to 16 mm.

Especially, the curable mineral binder composition includes one or more additive(s).

As for example, the additive is a concrete admixture and/or a mortar admixture and/or a process chemical. The additive more particularly comprises a wetting agent, a die, a preservative, a plasticizer, a retarder, an accelerator, a polymer, a rheological assistant, a viscosity modifier, a pumping assistant, a shrinkage reducer, or a corrosion inhibitor, or combinations thereof.

A proportion of the additive in particular is from 0.001 - 15 wt.%, especially 0.01 - 10 wt.% with respect to the total weight of the curable mineral binder composition.

Especially preferred, the additive is selected from accelerators and/or plasticizers.

An accelerator comprises for example at least one compound selected from the group consisting of amino alcohols, alkali metal and alkaline earth metal nitrates, alkali metal and alkaline earth metal nitrites, alkali metal and alkaline earth metal thiocyanates, alkali metal and alkaline earth metal halides, alkali metal and alkaline earth metal carbonates, glycerol, glycerol derivatives, glycols, glycol derivatives, aluminum salts, aluminum hydroxides, alkali metal and alkaline earth metal hydroxides, alkali metal and alkaline earth metal silicates, alkali metal and alkaline earth metal oxides, crystallization nuclei, and mixtures thereof.

An accelerator is preferably metered in an amount such that the curable mineral binder composition remains readily processable and/or shapeable for several seconds to several minutes. This allows the curable mineral binder composition for example to be used and optimized for additive manufacturing processes, e.g. 3D printing. Thereby, layers of the curable mineral binder composition can be applied uniformly whereby said layers develop a good cohesion. Additionally, the surface of the shaped body produced can, if desired, be subsequently after treated for example.

Examples of suitable plasticizers include lignosulfonates, sulfonated naphthalene-formaldehyde condensates, sulfonated melamine-formaldehyde condensates, sulfonated vinylcopolymers, polyalkylene glycols having phosphonate groups, polyalkylene glycols having phosphate groups, polycarboxylates or polycarboxylate ethers, or mixtures of the stated plasticizers; polycarboxylate ethers are understood to comprise comb polymers having anionic groups on the polymer backbone and having polyalkylene oxide side chains, the anionic groups being selected in particular from carboxylate groups, sulfonate groups, phosphonate groups, or phosphate groups.

In particular, the curable binder composition is produced in the setting state by mixing of the components of the curable binder composition in a mixing unit. Most preferably, the curable binder composition is continuously produced in the setting state, especially during the application of the curable binder composition in step a).

In particular, the curable mineral binder composition is introduced into a mixing unit, especially a dynamic mixing device, of the additive manufacturing device in dry form and/or in the form of a dry mortar or dry concrete composition. Thereby, the water is added into the mixing device separately from the curable mineral binder composition to produce the curable mineral binder composition in the setting state in the mixing device.

Further preferred, if used, the at least one additive is added to the mixing device separately from the curable mineral binder composition too. However, it might be added together with the water.

Separately introducing water and/or the additive into the mixing device allows for controlling the flow, setting and/or hardening properties of the curable mineral binder composition precisely during step a).

In another preferred embodiment, the curable mineral binder composition is introduced into the mixing device in wet form and/or in the form of a mortar or concrete composition premixed with water and optionally at least one further additive as described above, e.g. a plasticizer.

Especially, the curable mineral binder composition comprises a mineral binder and aggregates, especially sand. Thereby, preferably, a weight ratio of the aggregates to the mineral binder is from 5:1 - 1:2, especially 4:1 - 1.2:1.

Highly preferred, water in the curable mineral binder composition is used with a proportion of 25 - 50 wt.%, especially 30 - 45 wt.%, in particular 35 - 45 wt.%, with respect to the total weight of the mineral binder in the mineral binder composition.

A consistency class of the mineral binder composition preferably is S1, S2 or S3 and/or it has a slump of at most 150 mm, according to EN 206-1:2013 + A1 2016.

The forming of the at least one recess for receiving the reinforcement element in the three-dimensional object takes place during step a) or the production of the three-dimensional object, respectively. Thus, steps a) and b) in particular take place simultaneously.

Especially preferred, the at least one recess is defined in a structural data model of the three-dimensional object used to produce the three-dimensional object with the additive manufacturing device. The structural data model may be stored in a memory module of a control unit of the additive manufacturing device

Forming the at least one recess during step a) allows for optimizing the dimension, position and/or volume of the recess in view of the reinforcement required.

Especially, the recess is formed in an outer surface of the three-dimensional object. However, it is possible as well to form the recess in an inner surface of the three-dimensional object.

The at least one recess in particular is a groove, especially a rectangular groove or a trapezoidal groove, in particular a rectangular groove.

An aspect ratio of the height to the width of the groove preferably is > 1.5, especially > 2, in particular > 4. This allows for receiving ribbon-like reinforcing elements which are of particular advantage in the present invention. Further details about such kind of reinforcing elements are given below.

In case of more than one recess, at least one, especially exactly one, reinforcing element preferably is inserted in each recess.

The at least one recess preferably has a length of at least 50%, especially at least 75%, in particular 80 - 100%, of the length of the three-dimensional object in a direction of the longitudinal axis of the at least one recess. Especially, the longitudinal axis of the at least one recess runs along the length, the width or the height of the three-dimensional object.

Especially, the reinforcement element introduced in the at least one recess has a length of at least 50%, especially at least 75%, in particular 80 - 100%, of the length of the at least one recess and/or of a length of the three-dimensional object in a direction of the longitudinal axis of the at least one recess.

Thus, in this case, the reinforcing element extends over a significant length, width and/or height of the three-dimensional object resulting in an effective reinforcement of the three-dimensional object.

A shape of the reinforcing element in particular is at least partly, preferably fully, complementary to the shape of the at least one recess. In this case, the reinforcing element can be integrated in the surface at a defined position or even entirely be received safely within the recess.

According to a highly preferred embodiment, the reinforcing element and the recess are configured such that when the reinforcing element is inserted into the recess and bonded in the recess, the reinforcement element is flush with the surface, especially such that a continuous surface is obtained. The continuous surface might be a curved or a flat surface.

In another embodiment, the reinforcing element and the recess are configured such that when the reinforcing element is inserted into the recess and bonded in the recess, the reinforcement element partly protrudes from the recess and/or the surface, especially it protrudes from the recess and/or the surface with 30 - 70%, in particular 40 - 60% or 45 - 55%, of its height. In this case, the protruding part of the reinforcing element can for example be used as a mechanical guide for attaching an additional object. This is for example of interest if the three-dimensional object is to be combined with additional objects as described further below.

In particular, the inventive method further comprises the step of bonding, especially with an adhesive, an additional three-dimensional body, especially made of a further mineral binder material, on the three-dimensional object and/or on the reinforcing element. Thereby, preferably, the reinforcing element is at least partly, especially completely, covered with the additional three-dimensional body.

Especially, the additional three-dimensional body comprises a further recess, which is configured for at least partly receiving the reinforcement element. In this case, preferably, the three-dimensional object and the additional three-dimensional body are arranged such that the at least one recess and the at least one further recess are arranged opposite each other and whereby the reinforcing element is inserted partly in the recess and partly in the further recess.

Especially, the further recess of the additional three-dimensional body is identical in shape and dimensions with the at least one recess of the three-dimensional object.

In particular, a sandwich structure is produced in which the reinforcing element is arranged in between the three-dimensional object and the additional three-dimensional body.

Such kind of structures have shown to greatly enhance the flexural strength of the structure while the reinforcing element is located well protected and essentially invisible from the outer side within the structure.

Especially, the additional three-dimensional body is produced by additive manufacturing, especially comprising the steps of:
a') Applying a further curable mineral binder composition in the setting state with an additive manufacturing device, especially having a movable printing head, to produce the additional three-dimensional body;
b') Optionally, during production the additional three-dimensional body, forming the at least one further recess for receiving a reinforcement element in the further three-dimensional body.

Thus, the additional body can be produced in the same manner as the three-dimensional object described above. This allows for producing complex additional bodies with maximum flexibility.

However, the additional three-dimensional body may also be produced with a conventional method such as e.g. casting.

The "fiber-reinforced polymer" is a material comprising load-bearing fibers kept together by an organic synthetic material. In particular, the fiber-reinforced polymer is a composite material made of a matrix of the organic synthetic material reinforced with the load-bearing fibers. Thereby, in particular, the load-bearing fibers form are dispersed phase within the organic synthetic material forming a continuous phase of the fiber-reinforced polymer.

The fibers in the fiber-reinforced polymer may be oriented unidirectional in one and the same direction, bidirectional in two different directions or multidirectional in three or more directions.

In a direction perpendicular to the longitudinal direction, the reinforcing element preferably has a circular, oval, elliptic, rectangular and/or quadratic cross-section. Especially, the reinforcing element has an oval, elliptic, and/or rectangular cross-section.

Further preferred an aspect ratio of the height to the width of the cross-section is > 1.5, especially > 2, in particular > 4. In particular, for non-rectangular cross-sections, the height is meant to be the maximum feret diameter of the cross-section whereas width is meant to be the minimum feret diameter of the cross-section.

According to a preferred embodiment, a length of the reinforcing element and/or the fiber reinforced polymer in particular is equal to 50% or more, especially 75% or more, of the outer dimension of the three-dimensional object in a direction of the longitudinal axis of the reinforcing element.

According to another preferred embodiment, a width of the reinforcing element in particular is equal to 50% or more, especially 75% or more, of the outer dimension of the three-dimensional object in a direction perpendicular to the longitudinal axis of the reinforcing element.

Such dimensions allow to significantly increase the flexural strength of three-dimensional objects. However, other dimensions can be used as well.

Especially, a modulus of elasticity of the fiber reinforced polymer is > 40 GPa, in particular > 50 GPa, for example > 60 GPa. The modulus of elasticity of the fiber reinforced polymer can be measured according to standard ISO 527-3:2018.

Especially the load bearing fibers can be selected from metallic and/or non-metallic fibers. In particular, the load bearing fibers are non-metallic fibers, especially selected from natural fibers, inorganic fibers and/or synthetic fibers.

For example, the non-metallic load bearing fibers are selected from carbon fibers, glass fibers, igneous rock fibers, basalt fibers, polyolefin fibers, aramid fibers, vectran fibers, polyhydroquinone-diimidazopyridine fibers (PIPD fibers; M5 fibers), poly(p-phenylen-2,6-benzobisoxazol) fibers (PBO fibers; Zylon).

Preferably, the load-bearing fibers comprise or consist of carbon fibers and/or synthetic fibers. Thereby, preferably, the synthetic fibers are selected from polyhydroquinone-diimidazopyridine fibers and/or poly(p-phenylen-2,6-benzobisoxazol) fibers. These kind of fibers turned out to be highly stable under alkaline conditions prevailing in mineral binder compositions, resulting in a long lasting and secure reinforcement of the three-dimensional object.

Especially preferred, the load-bearing fibers comprise or consist of carbon fibers. Carbon fibers turned out to be optimal in terms of chemical stability, mechanical properties, and compatibility with organic synthetic materials for embedding.

Preferably, in the reinforcing element, the load-bearing fibers run in parallel and/or unidirectionally. Preferably the load-bearing fibers extend along the whole length of the reinforcing element.

This turned out to be optimal for load carrying. In particular, the load-bearing fibers are not twisted, in particular not helically twisted.

Especially, each reinforcing element comprises at least 5, in particular at least 10, preferably at least 25, for example at least 50, particularly at least 100, especially preferred at least 500, advantageously at least 800, load-bearing fibers. For example, a reinforcing element comprises 100 - 3000, especially 500 - 1500, load-bearing fibers.

In particular, the organic synthetic material of the fiber reinforced polymer is a thermoset and/or a thermoplast.

Especially, the organic synthetic material may comprise a single material or a mixture of two or more materials.

For example, the organic synthetic material is selected from epoxy resins, polyurethane resins, polyester resins, vinyl-ester resins, epoxy vinyl ester resins, polyolefins, vinyl polymers, polyamide, polyvinyl alcohol, polyester, polyoxymethylene, polycarbonate, thermoplastic polyurethane, and/or ionomers.

Preferably, the organic synthetic material is selected from epoxy resins, epoxy vinyl ester resins, polyamide, polyvinyl alcohol, and/or poly(ethylene-vinyl acetate). These materials turned out to be highly suitable in the present context. Especially preferred are epoxy resins and/or epoxy vinyl ester resins.

In particular, the epoxy resin and/or the epoxy vinyl ester resin is a one-component or a two-component curable resin. For example, a one-component resin comprises a latent curing agent, e.g. Dicyanamid. In this case, curing can be initiated by heating the resin to a predefined temperature.

Preferably, with respect to the total weight of reinforcing element, the reinforcing element comprises 40 - 99 wt.%, especially 50 - 95 wt.%, of the load-bearing fibers and 1 - 60 wt.% especially 5 - 50 wt.%, of the organic synthetic material.

In particular, the load-bearing fibers are kept together in a shear-resistant manner. This means that the load-bearing fibers in particular cannot move relative to each other.

Especially, the load-bearing fibers are fully impregnated and embedded within the organic synthetic material. Thereby, high strength fiber reinforced polymers can be produced, especially when using thermosets, e.g. epoxy resins, as organic synthetic material for embedding the load-bearing fibers and curing the thermosets.

According to another preferred embodiment, the reinforcing element is configured as a core-shell structure with the load-bearing fibers forming the core of the and the organic synthetic material forming a casing around the core. Thereby, in particular, the load-bearing fibers are only partly impregnated with the organic synthetic material, such that they can move relative to each other within the fiber reinforced polymer.

According to an especially preferred embodiment, the reinforcing element is configured as follows:
- the load-bearing fibers comprise carbon fibers, basalt fibers, glass fibers and/or synthetic fibers, whereby the synthetic fibers are selected from aramid fibers, polyhydroquinone-diimidazopyridine fibers and/or poly(p-phenylen-2,6-benzobisoxazol) fibers; and
- the organic synthetic material is selected from epoxy resins, polyamide, ethylene-vinyl acetate and/or epoxy vinyl ester resins; and
- the reinforcing element comprise 40 - 99 wt.%, especially 50 - 95 wt.%, of the load-bearing fibers and 1 - 60 wt.% especially 5 - 50 wt.%, of the organic synthetic material; and
- the aspect ratio of the height to the width of the cross section is > 1.5, preferably > 2; and
- the modulus of elasticity of the reinforcing element preferably is > 40 GPa, in particular > 50 GPa, for example > 60 GPa;

In a further preferred embodiment:
- the load-bearing fibers comprise or consist of carbon fibers; and
- the organic synthetic material is an epoxy resin and/or or an epoxy vinyl ester resin; and
- the reinforcing element comprises 40 - 99 wt.%, especially 50 - 95 wt.%, of the load-bearing fibres and 1 - 60 wt.% especially 5 - 50 wt.%, of the organic synthetic material; and
- the aspect ratio of the height to the width of the cross section is > 1.5, preferably at > 2; and
- the modulus of elasticity of the reinforcing element preferably is > 40 GPa, in particular > 50 GPa, for example > 60 GPa.

These specific configurations in particular result in highly beneficial reinforcing elements featuring a high chemical stability, advantageous mechanical properties and high durability. However, other configurations might be suitable as well, in particular for special applications.

In particular, the reinforcing element does not comprise metallic materials, especially steel, in particular steel fibers.

The reinforcing elements or the fiber reinforced polymers, respectively, can e.g. be produced by pultrusion. Thereby, for example, load-bearing fibres are impregnated and/or coated using a die or a bath of the organic synthetic material used for embedding through which the load-bearing fibers are pulled horizontally and/or vertically. Pultrusion processes for producing fibers are known to the skilled person.

Suitable reinforcing elements are commercially available under the tradename CarboDur^{®} from Sika AG (Switzerland).

The adhesive used for bonding the reinforcing element in the at least one recess in particular is a reactive adhesive. Reactive adhesives require a chemical reaction for hardening. These adhesives are classified into one- and two-component reactive adhesives and usually provide high strength adherence to various materials to be bonded.

Especially, the adhesive is selected from an epoxy-based adhesive, a polyurethane based adhesive and/or an acrylate based adhesive.

Especially preferred, the adhesive is an epoxy-based adhesive.

Such kind of adhesives usually comprise an epoxy resin as the first component and a curing agent as the second component. The epoxy resins preferably contain at least two epoxide groups in the molecule and may be e.g. be based on diglycidyl ethers and/or polyglycidyl ethers of polyhydric aliphatic and/or aromatic alcohols.

Possible epoxide curing agents are for example acidic or basic compounds. Examples of suitable curing agents are amines such as aliphatic, cycloaliphatic, aromatic or araliphatic, preferably primary or secondary, amines.

Such composition may also comprise further components, such as e.g. accelerators, curing catalysts, tougheners, thixotropic agents, and/or fillers.

Especially, the epoxy-based adhesive comprises a filler, for example selected from quartz, sand and/or limestone, in particular limestone. This allows for obtaining beneficial rheological properties. Especially, the epoxy-based adhesive, with respect to the total weight of the adhesive, comprises 5 - 70 wt.%, in particular 10 - 60 wt.%, preferably 20 - 50 wt.%, of filler, especially limestone.

With a proportion filler of less than 70 wt.%, especially less than 60 wt.%, the epoxy resin can be made self-leveling. This is in particular beneficial for bonding the reinforcing element in the recess.

Especially, the adhesive is a structural two-component and filled epoxy-based adhesive, in particular having thixotropic properties.

Suitable adhesives are for example available from Sika AG (Switzerland) under the tradename SikaDur^{®}.

In a further preferred embodiment, before step d), especially before step c), the at least one recess is sealed by applying a sealant. This allows for example to improve waterproofness of the reinforced three-dimensional object, especially at sensitive section such as e.g. edges of the at least one recess.

A sealant is a substance capable of blocking the passage of fluids through the surfaces, edges, joints and/or openings in the at least one recess. Suitable substances are known to the skilled person and are chosen depending on the specific needs.

Especially, step c) is performed first and subsequently step d) is performed. Thus, in this case, the reinforcing element first is inserted into the at least one recess and then the adhesive is applied for bonding the reinforcing element.

According to another preferred embodiment, before step c), at least a part of the adhesive, especially all of the adhesive used for boding the reinforcing element, is placed into the at least one recess and subsequently, the reinforcing element is inserted in the recess. Thereby, the reinforcing element is in particular at least partly pressed into the adhesive already present in the at least one recess. Optionally, further adhesive may be applied later to additionally embed the reinforcing element.

According to a further preferred embodiment, the reinforcing element is put under tension during and/or after step c) whereby the tension preferably is kept until the boding in step d) has been completed, especially until the adhesive has hardened. With this measure, the load capacity of the reinforced three-dimensional object can be increased.

However, depending on the application or required properties of the reinforced three-dimensional object, the reinforcing element can be bonded in the at least one recess without tension as well.

The term "additive manufacturing method" or "additive manufacturing" refers to methods in which a three-dimensional object is produced by selective three-dimensional deposition, application and/or solidification of material. In this process, the deposition, application and/or solidification of the material takes place in particular based on a data model of the object to be produced, and in particular in layers or sheets. In the additive manufacturing method, each object is typically produced from one or a plurality of layers. Accordingly, an additive manufacturing device is a device capable of performing such methods.

Especially, in step a) the three-dimensional object is applied with the additive manufacturing device in at least one layer, especially in a plurality of layers. Thereby, preferably, the application is effected by means of a print head that is moveable in at least one, especially in three, spatial direction(s).

The additive manufacturing device used in the present invention in particular performs a generative free space additive manufacturing process. This means that the three-dimensional object is formed layer by layer, namely by applying the first curable mineral binder composition only at those points where the three-dimensional object is to be formed. In the case of overhangs and/or cavities, a support structure can optionally be provided. In contrast, in powder bedding or liquid processes, for example, the entire space is typically filled and the material is then selectively solidified at the desired locations.

Free-space processes have proved to be particularly advantageous in connection with the production of reinforced three-dimensional objects from curable binder.

The three-dimensional object produced in step a) can have almost any desired shape and can, for example, be a finished part for a structure, e.g. for a building, a masonry structure and/or a bridge.

In particular, the additive manufacturing device comprises:
- a mixing unit, especially a dynamic mixing device, for producing the curable mineral binder composition in the setting state;
- a printing head movable in at least one spatial direction, especially with a movement device, for applying the curable mineral binder composition in the setting state.

The mixing unit for producing the curable mineral binder composition in the setting state can be included in the printing head or it can be located at a position spaced apart from the printing head.

In the first case, the components of the curable binder composition can be conveyed separately via supply lines to the mixing unit. In the latter case, the additive manufacturing device additionally comprises a supply line for conveying the curable binder composition in the setting state from the mixing unit to the printing head.

Optionally the additive manufacturing device furthermore comprises at least one additive supply device whereby the additive supply device preferably is arranged at the printing head and/or in a supply line upstream the printing head, which additive supply device is configured to add an additive to the curable binder composition in the setting state. This allows for specifically adjusting the properties of the curable binder composition in the setting state by adding the additive before the binder composition is applied with the printing head.

Especially preferred, in step a) the curable mineral binder composition produced in the mixing unit is applied with the printing head, especially in a layer-by-layer application, to produce the three-dimensional object in step a).

For applying the curable binder composition in the setting state, the printing head is in particular controlled on the basis of a structural data model of the three-dimensional object. The structural data model may be stored in a memory module of a control unit of the additive manufacturing device.

In particular, the additive manufacturing device comprises a separate inlet for introducing an additive separately into the mixing unit.

Especially, the mixing device of the additive manufacturing device is a dynamic mixing device. This is meant to be a mixing device whereby the mixing is effected by at least one moving mixing element. In contrast, a static mixer is a mixing device without any moving mixing elements.

Especially, the dynamic mixing device comprises at least one dynamic mixing element, especially a rotatable mixing element, for mixing the components, which is operated at a speed of 500 - 2'000, especially 600 - 1'700, most preferably of 1'000 to 1'500, revolutions per minute.

The mean residence time of the components in the dynamic mixing device in step b) in particular is from 1 - 30 s, especially 5 - 20 s, in particular 10 - 15 s. The mean residence time of the curable binder composition in the dynamic mixing device is the average period of time for which a particle resides in the dynamic mixing device, from introduction to the removal. The mean residence time can for example be controlled by the conveying speed of the components introduced into and/or removed from the dynamic mixing device.

The dynamic mixing device preferably comprises a drum having at least one inlet and one outlet, a drive, a stirring shaft for mixing the components, said stirring shaft being arranged in the drum and being coupled to the drive. In this embodiment, the stirring shaft is a special kind of a stirring element.

In one advantageous exemplary embodiment, the stirring shaft is equipped with pegs such that, while the stirring shaft rotates, a mix in the drum is moved by the pegs. This has the advantage that, as a result, efficient and homogeneous mixing of the different components can be achieved. Furthermore, a specific arrangement and configuration of the pegs can influence both mixing and conveying of the mix in the drum.

Such stirring shafts having pegs are suitable in particular for mixing components with large grain sizes, for example grain sizes of 2 to 10 mm. These can be for example aggregates such as stones, gravel or sand. In addition, such a mixer is also suitable for mixing asymmetrical substances, for example mixes having fiber admixtures (for example carbon fibers, metal fibers or synthetic fibers).

In an alternative exemplary embodiment, the stirring shaft is not equipped with pegs but is configured for example as a helical stirrer, disk stirrer or inclined-blade stirrer.

More preferably, the dynamic mixing device is connected with a conveying device and/or it comprises a conveying device. Especially preferred, the conveying device is arranged in the drum.

In one advantageous embodiment, the conveying device is arranged in a manner directly adjoining the stirring shaft such that the mix mixed by the stirring shaft is able to be collected directly by the conveying device and is able to be conveyed out of the drum through the outlet.

In one advantageous exemplary embodiment, the conveying device and the stirring shaft are arranged on one and the same driveshaft, wherein said driveshaft is drivable by the drive. This has the advantage of resulting in a cost-effective and robust device.

In an alternative exemplary embodiment, the conveying device and the stirring shaft are arranged on two separate driveshafts, wherein the conveying device is arranged on a first driveshaft and the stirring shaft is arranged on a second driveshaft, with the result that the conveying device and stirring shaft are drivable at different speeds. Such an arrangement has the advantage that, as a result, the mixing and conveying of the mix can be set separately from one another. In this way, for each particular purpose, optimum mixing and conveying can be achieved through a specifically adaptable mixing rate and conveying rate. For example, for a first application, slight mixing with a simultaneously high conveying rate and/or conveying at high pressure may be advantageous, and for a second application, intensive mixing with a simultaneously low conveying rate and/or conveying at low pressure may be advantageous.

In one advantageous exemplary embodiment, the stirring shaft and the conveying device are arranged next to one another in the drum, wherein the stirring shaft is arranged in a first drum section and the conveying device is arranged in a second drum section, and wherein the inlet is arranged in the first drum section and the outlet is arranged in the second drum section.

In one advantageous development, the first drum section with the stirring shaft arranged therein forms between 50% and 90%, preferably between 60% and 85%, particularly preferably between 70% and 80%, of a volume of the drum. It has been found that, as a result of such a division of the drum, an optimum mixing rate with a desired conveying rate of the mixer can be achieved.

In one advantageous exemplary embodiment, the conveying element is configured as a screw conveyor. In one advantageous development, the screw conveyor has at least one, preferably at least two turns. Such a screw conveyor has the advantage that, as a result, even highly viscous mixes can be conveyed in the drum and, in addition, can be conveyed out of the drum through the outlet at a desired pressure.

In a further advantageous development, a cross section of a shaft of the conveying device can be configured in a variable manner in the direction of the driveshaft. In this case, a volume for the mix becomes smaller toward one end of the conveying device. As a result, a conveying pressure of the conveying device can be changed depending on the orientation of the reduction in size of the volume for the mix.

In one advantageous development, more than two turns can be formed. In addition, the turns can have different extents in the direction of the driveshaft. wherein the turns become tighter toward one end of the conveying device. As a result, a conveying pressure of the conveying device can be changed depending on the orientation of the tightening of the turns.

Especially, the dynamic mixing device is connected with a feed device with which the mineral binder, aggregates, water and/or at least one additive can be added to the mixing device, preferably independently of each other. For this, the feed device preferably has at least two, especially at least three, separate inlets configured for discharging the components individually into the dynamic mixing device. With that, the composition of the curable mineral binder composition(s) can be adapted at any time and in a flexible manner.

In order to mix components together and to convey them, it is possible for only one inlet or two or more inlets to be arranged on the drum. In this case, the components can for example be combined before they are passed into the drum, or the components can be passed into the drum via separate inlets and only be mixed together once they are in the drum.

Depending on the number and arrangement of the inlets, the stirring shaft and the stirring elements arranged thereon, such as pegs, for example, can be configured differently.

A further aspect of the present invention is directed to a reinforced three-dimensional object produced by an additive manufacturing process, especially obtainable by a method as described above.

Further advantageous implementations of the invention are evident from the exemplary embodiments.

### Brief description of the drawings

The drawings used to explain the embodiments show:
- Fig. 1: a schematic illustration of an exemplary dynamic mixing device with integrated conveying device suitable for producing curable mineral binder compositions;
- Fig. 2: a schematic illustration of a mixing device for mixing a pulverulent components and liquid components;
- Fig. 3: a schematic illustration of an exemplary additive manufacturing device with the mixing device of Fig. 1 arranged on the printing head suitable for applying curable mineral binder compositions;
- Fig. 4: a schematic representation of a first unreinforced three-dimensional object in the form of a prism with a rectangular groove at the top surface (at the bottom) and a reinforcement element which is complementary in shape to the groove;
- Fig. 5: the elements of Fig. 4 after the reinforcement element has been inserted into the recess and bonded with an adhesive therein;
- Fig. 6: a second three-dimensional object a second reinforcing element received and bonded in a recess on the top surface of the object. Thereby, the reinforcement element partly protrudes from the top surface;
- Fig. 7: a partially transparent view of a sandwich structure comprising the object of Fig. 6 and an additional body attached to it. Thereby the reinforcing element is placed in between the object and the body in the recesses of the two bodies.

### Exemplary embodiments

### Method and device for additive manufacturing

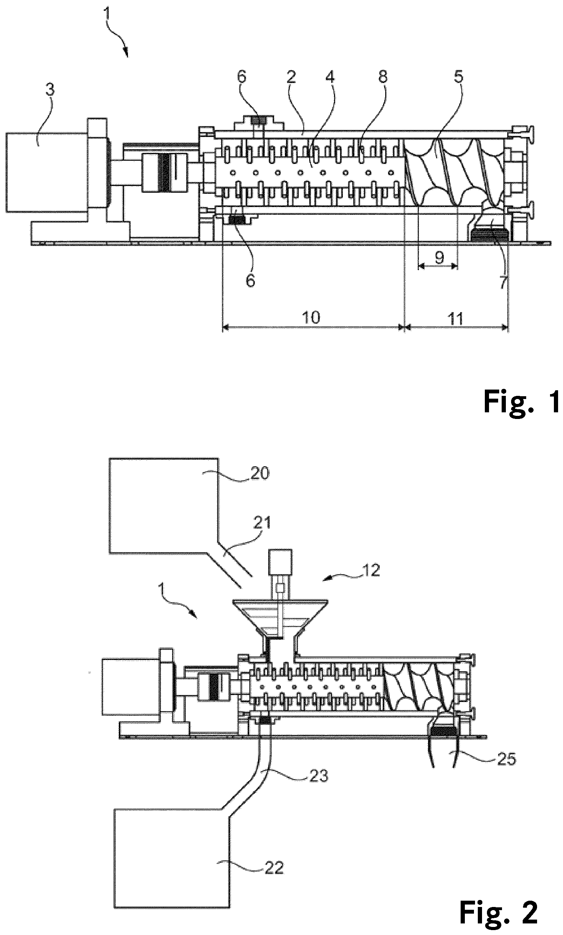

Fig. 1 illustrates an exemplary mixer 1. The mixer 1 has a drive 3, a drum 2, a stirring shaft 4, and a conveying device 5. The drum 2 in this case has two inlets 6 and one outlet 7. The inlets 6 are in this case located in a first drum section 10, in which the stirring shaft is arranged, and the outlet 7 is located in a second drum section 11, in which the conveying device 5 is also arranged.

In this exemplary embodiment, two inlets 6 are arranged on the drum 2. In an alternative exemplary embodiment, which is not illustrated, the drum 2 can for example have only one inlet, however. In this case, the components to be mixed can already be combined before they are conveyed into the drum 2 via the inlet. In other alternative embodiments, the drum can have three or more inlets for introducing three or more components to be mixed separately.

In this case, the conveying device 5 is arranged in a manner directly adjoining the stirring shaft 4 such that the mix mixed by the stirring shaft 4 is able to be collected directly by the conveying device 5 and is able to be conveyed out of the drum 2 through the outlet 7.

In this exemplary embodiment, the conveying device 5 is configured as a screw conveyor. The screw conveyor in this exemplary embodiment has two complete turns 9. Depending on the desired conveying rate, the screw conveyor can be dimensioned or configured in some other way. The conveying device 5 and the stirring shaft 4 are arranged on one and the same axis in the drum 2. In this exemplary embodiment, the stirring shaft 4 is equipped with pegs 8 such that, while the stirring shaft rotates, a mix in the drum is moved by the pegs 8.

Fig. 2 again illustrates an exemplary mixer 1 having a feeding device 12 at one of the inlets. A first component 20, and a second component 22 are continuously fed to the mixer 1 via a first feed line 21 and via a second feed line 23, respectively. For example, in this case, the first component 20 can be a pulverulent component, e.g. a curable mineral binder composition in the form of a dry mortar composition, which is fed into the hopper of the feeding device 12 via the first feed line 21, and the second component 22 can be for example a liquid or pumpable substance, e.g. water and optionally an additive, e.g. plasticizer, which is passed directly into the drum of the mixer 1 via the second feed line 23.

During the mixing operation, the dry mortar composition is mixed with water and the optional additive, whereby a curable mineral binder in the setting state is produced which is conveyed through the outlet 25 of the mixer by the conveying device 5.

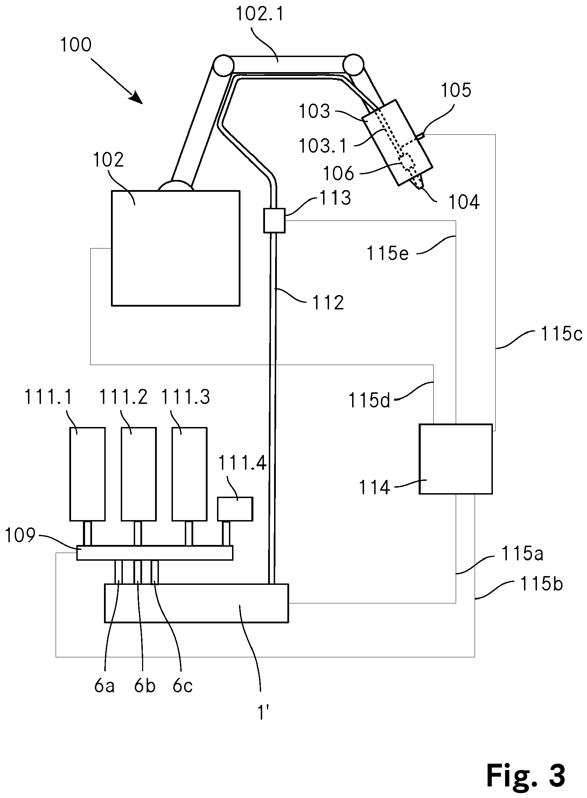

Fig. 3 illustrates an additive manufacturing device 100 for applying a curable mineral binder composition for producing a three-dimensional object.

The system 100 comprises a movement device 102 with a movable arm 102.1. A print head 103 is attached to the free end of the arm 102.1, which can be moved by the arm 102.1 in all three spatial dimensions. Thus, the print head 103 can be moved to any position in the working area of the motion device 102.

Inside, the print head 103 has a tubular passage 103.1 passing through from the end face facing the arm 102.1 (at the top in Fig. 3) to the opposite and free end face. The tubular passage is configured for conveying a curable binder composition. At the free end, the passage 103.1 opens into an outlet nozzle 104.

The print head 103 comprises a first inlet device 105 consisting of a supply device, e.g. a pump, and an inlet nozzle, which opens into passage 103.1. Through the inlet nozzle of the inlet device 105, an additive, for example a rheological aid, can be added to the curable binder composition flowing through the passage 103.1 as required.

Furthermore, inside the print head 103, downstream with respect to the inlet devices, a dynamic mixer 106 is arranged in the passage 103.1, which additionally mixes the curable binder composition and the additive. However, the dynamic mixer 106 is optional and can for example be replaced by a static mixer or omitted.

The system 100 for applying a curable building material also has a feed device 109 which corresponds on the input side to three containers 111.1, 111.2, 111.3 and an additive reservoir 111.4. Each of the three containers 111.1, 111.2, 111.3 contains one component of the curable building material. The first component, which is present in the first container 111.1, is a dry mineral binder composition, e.g. cement or dry mortar. The second component, which is present in the second container 111.2, consists of water, for example. The third component present in the third reservoir 111.3 is, for example, a superplasticizer in the form of a polycarboxylate ether. In the additive reservoir 111.4 there is present, for example, a rheological aid in the form of modified cellulose and/or a microbial polysaccharide.

On the output side, the feed device 109 has three separate outlets, each of which is connected to one of three inlets 6a, 6b, 6c of a mixing device 1'. The feed device 109 also has individually controllable metering devices (not shown in Fig. 3), so that the individual components in the individual containers 111.1, 111.2, 111.3 can be metered individually into the mixing device 1'.

A further outlet of the feed device is connected to the inlet nozzle 105 (not shown in Fig. 3), so that additive can be fed from the additive reservoir 111.4 into the inlet nozzle 105 via a further metering device of the feed device 109.

The mixing device 1' is similar in design to the mixing device shown in Fig. 1 but has three inlets 6a, 6b, 6c. In the mixing device 1', the individually metered components are mixed together and conveyed into the flexible line 112 attached to the outlet side of the mixing device 1'. In operation, the mixing and conveying of the curable binder composition can take place continuously.

The curable binder composition can be conveyed into the print head 103 via the flexible line 112, which opens into the tubular passage 103.1, and continuously applied through the outlet nozzle 104.

Also, part of the system 100 is a measuring unit 113, which is integrated into the delivery line 112 in the area between the mixing device 100 and the print head 103. The measuring unit includes, for example, an ultrasonic transducer which is designed to determine the flow properties of the curable material.

A central control unit 114 of the system 100 includes a processor, a memory unit, and a plurality of interfaces for receiving data and a plurality of interfaces for controlling individual components of the system 100.

In this regard, the mixing device 1' is connected to the control unit 114 via a first control line 115a, while the feeding device 109 is connected to the control unit 114 via a second control line 15b. As a result, the individual components in the containers 111.1, 111.2, 111.3 can be metered into the mixing device 1' via the central control unit in accordance with predetermined recipes stored in the control unit and conveyed into the flexible line 112 at adjustable conveying rates.

The inlet device 105 is connected to the control unit 114 via a separate control line 115c and can be controlled or monitored by the control unit 114 too.

The movement device 102 is also connected to the control unit 114 via a further control line 115d. This means that the movement of the print head 103 can be controlled via the control unit 114.

Similarly, the measuring unit 113 is connected to the control unit 114 by a control line 115e, so that data recorded in the measuring unit characterizing the flow properties can be transmitted to the control unit 114.

A structural data model of the three-dimensional object to be produced may be stored in a memory module of a control unit 114 of the additive manufacturing device 100.

In this configuration, the additive manufacturing device 100 can be operated as a "two-component system" in which an additive is added separately as a second component to the other constituents of the curable binder composition representing a first component.

However, in another embodiment, all of the constituents the curable binder composition, including an optional additive, can be premixed in the mixing device 1'. Thereby, the manufacturing device 100 is operated as a "one-component system" without addition of an additive through inlet device 105. In this case, manufacturing device 100 the inlet device 105 and related elements can even be omitted to simplify the setup.

### Production of reinforced three-dimensional objects

For producing reinforced three-dimensional objects, SikaCrete^{®}-7100 3D (available from Sika USA) was used as the curable mineral binder composition. This is a multi-component fiber-containing micro-concrete ink system developed for 3D printing comprising (i) a dry mortar composition with Portland cement and sand, (ii) an accelerating additive and plasticizing polymer admixture.

The components were continuously introduced at a constant rate into the mixing device shown in Fig. 2 and continuously mixed at a speed of for example 800 rpm.

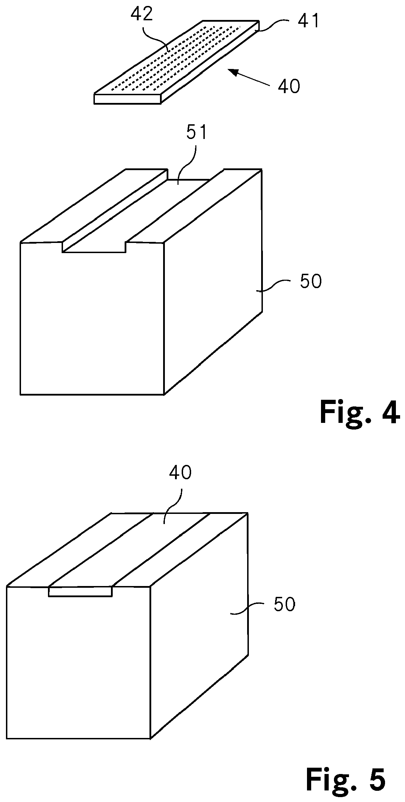

The so produced mineral curable mineral binder composition was applied with the printing head 1 of the additive manufacturing device 30 to produce the unreinforced three-dimensional elements 50, 50', 50" (cf. Fig. 4, 6 and 7).

Fig. 4 shows a schematic representation of the first unreinforced three-dimensional object 50 in the form of a prism (4 × 4 × 16 cm) with a rectangular groove 51 at the top surface running in a direction parallel to the longitudinal axis of the object 50.

On top of the object 50, a reinforcement element 40 is shown. The reinforcement element 40 consists of load-bearing carbon fibers 42 embedded in an epoxy matrix 41 as e.g. available under the tradename CarboDur^{®} from Sika AG (Switzerland). The reinforcement element 40 is complementary to the recess 51 of the object.

Fig. 5 shows the situation after the reinforcement element 40 has been inserted into the recess 51 and bonded with an adhesive therein. The adhesive used for bonding was Sikadur^{®}-30 (available form Sika AG, Switzerland), which is a thixotropic, structural two-component epoxy-based adhesive.

In Fig. 5, the reinforcement element 40 is flush with the top surface of the object 50, such that a continuous flat surface is present. This is due to the complementary shape of the reinforcing element 40 and the recess 51.

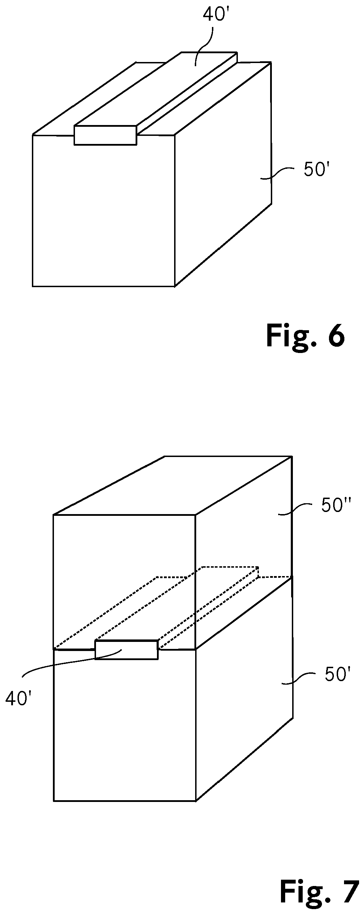

Fig. 6 shows a second three-dimensional object 50' made from the same curable composition with a second reinforcing element 40' received and bonded in a recess on the top surface of the object 50'. The reinforcing element 40' is similar in structure as the element 40 and the adhesive used for binding is the same as described above. However, in this case the height of the reinforcement element 40' is about twice as high as the depth of the recess so that the reinforcement element 40' protrudes from the surface of the object 50'. This allows for example for attaching an additional body on the object 50' as shown in Fig. 7.

Specifically, Fig. 7 shows a sandwich structure comprising the object 50' and an additional body 50", which is identical in design. The two elements 50', 50" are arranged such that the two recesses in the bodies face each other and the reinforcing element 40' is partly received and bonded in the recess of the lower object 50' and partly received and bonded in the recess of the upper body 50".

Also, bodies 50', 50" could be formed as a one piece body whereby a cuboid recess is formed in the central part for receiving the reinforcing element 40'. The recess can be formed during printing of the one piece body and/or by removing material in the central part.

For testing the effectiveness of the reinforcing elements, the flexural strengths were measured versus the deflection in a standard 3 points bending tests. Compared to corresponding reference samples without reinforcing elements, an increase in flexural strength by a factor of 5 - 8 was observed for the reinforced three-dimensional objects shown in Fig. 5 and 8. Interestingly, the sandwich structure results in an increase in deflection before braking. This means that object with such kind of structures are both safer to transport and can sustain higher deformations.

It will be appreciated by those skilled in the art that the present invention can be implemented in other specific forms without departing from the spirit or essential characteristics thereof. The presently disclosed embodiments and embodiments are therefore considered in all respects to be illustrative and not restricted.

For example, the mixer 1 can be placed stationary upstream the printing head. In this implementation, a mineral binder composition in the setting state with good fluidity can be produced in the stationary mixer and conveyed through the supply line to the printing head where an additive, e.g. an accelerator and/or a rheology modifier, can be added to the mineral binder in the setting state with an additive supply device such as e.g. a nozzle.

## Claims

1. A method for producing a reinforced three-dimensional object from a mineral binder composition with an additive manufacturing process, the method comprising the steps of:
a) Applying a curable mineral binder composition in the setting state with an additive manufacturing device, especially having a movable printing head, to produce the three-dimensional object;
b) During production of the three-dimensional object in step a), forming at least one recess in a surface of the three-dimensional object for receiving a reinforcement element in the three-dimensional object;
c) Insertion of a reinforcing element into the at least one recess, whereby the reinforcing element is a fiber-reinforced polymer comprising load-bearing fibers kept together by an organic synthetic material;
d) Bonding the reinforcing element in the at least one recess with an adhesive.

2. The method according to any of previous claims, whereby a shape of the reinforcing element is at least partly, especially fully, complementary to the shape of the at least one recess.

3. The method according to any of previous claims, whereby the reinforcing element and the recess are configured such that when the reinforcing element is inserted into the recess and bonded in the recess, the reinforcement element is flush with the surface, especially such that a continuous surface is obtained.

4. The method according to any of claims 1 or 2, whereby the reinforcing element and the recess are configured such that when the reinforcing element is inserted into the recess and bonded in the recess, the reinforcement element partly protrudes from the recess and/or the surface, especially it protrudes from the recess and/or the surface with 30 - 70%, in particular 40 - 60% or 45 - 55%, of its height.

5. The method according to any of previous claims, further comprising the step of bonding, especially with an adhesive, an additional three-dimensional body, especially made of a further mineral binder material, on the three-dimensional object and/or on the reinforcing element, in particular such that the reinforcing element is at least partly, especially completely, covered with the additional three-dimensional body.

6. The method according to claim 5, whereby the additional three-dimensional body comprises a further recess, which is configured for at least partly receiving the reinforcement element and whereby the three-dimensional object and the additional three-dimensional body are arranged such that the at least one recess and the at least one further recess are arranged opposite each other and whereby the reinforcing element is inserted partly in the recess and partly in the further recess.

7. The method according to any of claims 5 or 6, whereby a sandwich structure is produced in which the reinforcing element is arranged in between the three-dimensional object and the additional three-dimensional body.

8. The method according to any of previous claims, whereby the at least one recess is a groove, in particular a rectangular groove, in an outer surface of the three-dimensional object.

9. The method according to any of previous claims, whereby the reinforcing element, in a plane perpendicular to the longitudinal direction, has a rectangular cross-section with an aspect ratio of the height to the width > 1.5, especially > 2, in particular > 4.

10. The method according to any of previous claims, whereby the load-bearing fibers comprise carbon fibers, basalt fibers, glass fibers and/or synthetic fibers, whereby the synthetic fibers are selected from aramid fibers, polyhydroquinone-diimidazopyridine fibers and/or poly(p-phenylen-2,6-benzobisoxazol) fibers.

11. The method according to any of previous claims, whereby the load-bearing fibers consist of carbon fibers and the organic synthetic material is selected from epoxy resins, epoxy vinyl ester resin, polyamide, polyvinyl alcohol and/or poly(ethylene-vinyl acetate).

12. The method according to any of previous claims, whereby, with respect to the total weight of the reinforcing element, the fiber reinforced polymer comprises 40 - 99 wt.%, especially 50 - 95 wt.%, of non-metallic load-bearing fibers and 1 - 60 wt.% especially 5 - 50 wt.%, of the organic synthetic material.

13. The method according to any of previous claims, whereby in the fiber reinforced polymer, load-bearing fibers are fully impregnated and embedded within the organic synthetic material.

14. The method according to any of previous claims, whereby the adhesive is an epoxy-based adhesive, especially a structural two-component epoxy-based adhesive, in particular having thixotropic properties.

15. A reinforced three-dimensional object obtainable by a method according to any of previous claims.
